# EUROPEAN PATENT APPLICATION

(11) **EP 1 543 750 A1**
(43) Date of publication of application: **22.06.2005**
(21) Application number: 04029026.4
(22) Date of filing: 08.12.2004
(51) Int. Cl.: A47G 1/06, F21V 33/00

(54) **A system for illuminating an image set inside a picture frame**

(30) Priority: 15.12.2003 IT to20030192
(71) Applicant: Back lights di Camandona Luca, 12042 Bra (TO) (IT)
(72) Inventor: Camandona, Pier Marco, 12042 Bra (IT); Camandona, Luca, 12042 Bra (IT)
(74) Representative: Lotti, Giorgio

(57) **Abstract**

A system for illuminating an image set inside a picture frame (10, 29) and a framework (11, 30) envisages that: the image will be reproduced on a body (14, 16) designed to be traversed by light coming from a light source (8, 40) set between the body (14, 16) and the framework (11, 30); means (1, 2, 3, 4, 46) will be provided for electrical supply of said light source (8, 40); and means (6) will be provided for electrical connection between the supply means (1, 2, 3, 4, 46) and the light source (8, 40).

## Description

The present invention relates to a system for illuminating an image reproduced on a support that can be traversed by the light emitted by said system, in particular the image being thermally reproduced on the support and set in a picture frame, of the type used on desks, on walls, on tombstones, or else on a portion of fixed wall, such as panels on bars and counters in public houses or cafés, or for kitchens.

Often, framed photographs of deceased persons that are put on tombstones are not very visible, above all in winter, on account of the poor lighting in cemeteries, which in some cases is almost absent.

In addition, there is not always available an electric-power source or the possibility of connection to the electrical network of the cemetery, precisely on account of the fact that an electrical network serving the various tombs or burial niches for providing night lighting is not always available.

Even an installation with a solar-cell panel would not be suitable for guaranteeing lighting with incandescent lamps for a sufficient number of hours, even if it were of a low-consumption type, unless a system were used that presented dimensions that would be unsuitable for the place of installation. In addition, the lamp and the lamp-holder with the wires for electrical connection would be placed on the tombstones in a position that would not always be acceptable from an aesthetic standpoint.

As regards picture frames for photographs of the type used on desks, it is of course not possible to use lighting systems of large dimensions, nor ones of the solar-panel type. Furthermore, the latter cannot be used for pictures either, unless lighting systems are adopted that extend outside the premises where the picture is present.

A purpose of the present invention is to provide a system for illuminating an image set in a movable picture frame for desks or walls, or else in a fixed frame, such as the ones used on tombstones, which will enable the drawbacks described above to be overcome, with an extremely low power consumption and with very contained overall dimensions.

A further purpose of the invention is to propose a lighting system that can have an unlimited duration in time, which is particularly advantageous in the case of tombstones.

The above purposes are achieved by the present invention, the subject of which is a lighting system as defined in the annexed Claim 1.

Further characteristics and advantages will emerge clearly from the ensuing description, with reference to the annexed plate of drawings, which are provided purely by way of non-limiting example and in which:
- Figure 1 is a schematic view of a first preferred embodiment of the system according to the present invention designed to be placed on a tombstone;
- Figure 2 is a schematic view of a second preferred embodiment of the system according to the present invention designed to be set on a portable picture frame; and
- Figure 3 is a schematic view of a third preferred embodiment of the system according to the present invention, which is designed to be placed on a tombstone.

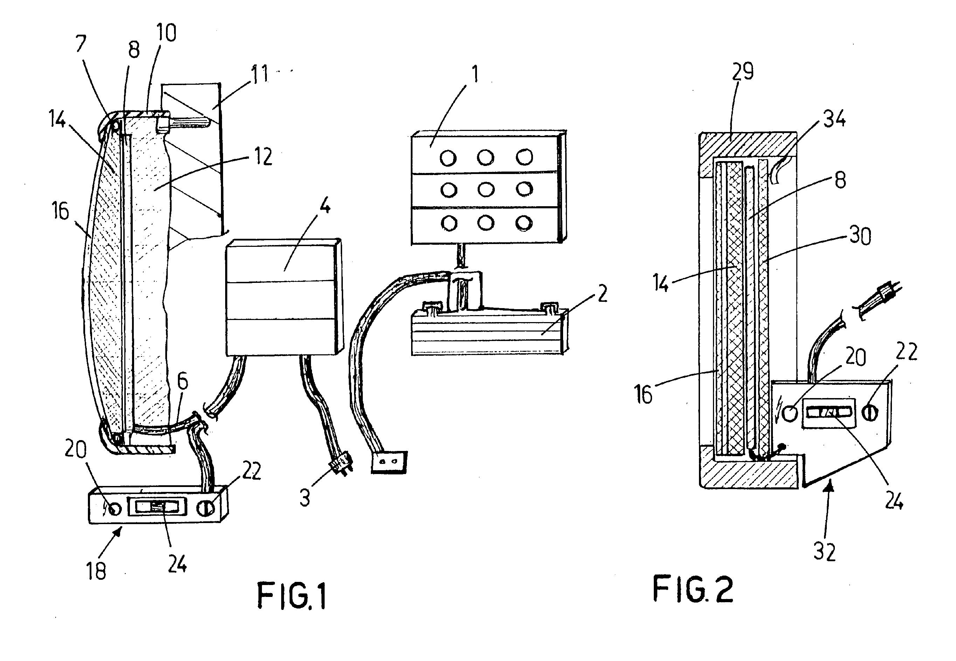

With reference to Figure 1, which regards a lamp for a tombstone, number 1 designates a solar-cell panel, connected, via appropriate means of a known type and hence not illustrated, to a battery 2 of a rechargeable type, preferably a 12-V d.c. battery. Connected to the output of the battery 2 is a converter 4, capable of converting, in the case illustrated here, the 12-V d.c. current into a.c. current, preferably 110-V 400-Hz a.c. current. Connected by an electric wire 6 to the output of the converter 4 is an electroluminescent lamp or panel 8, made in the form of a plate preferably having a thickness of 0.3 mm.

The electroluminescent lamp 8 is inserted in a picture frame 10 fixed on a tombstone 11 and is closed at the rear by a filling wall, made of polystyrene foam. Said wall may of course be made of any other equivalent material, again with the purpose of protecting the lamp at the back from the humidity of the surrounding environment. Of course, the dimensions of the electroluminescent lamp and of the picture frame may be chosen in such a way that the former can be inserted into the latter.

Set in front of the lamp 8 and once again inside the picture frame 10 is the transparent/opaque body 14, on which the image (photograph) to be illuminated is reproduced.

Applied between the outer frame 10 and the internal assembly formed by the body 14, the lamp 8 and the wall 12 is a bead of silicone 7, which has the function of sealing the lamp 8 in such a way that the latter is not subject to inclement weather conditions and can last for an almost infinite period of time.

A preferred, but non-limiting, embodiment of the invention envisages that the body 14 will be made of a crystal glass with an appropriate size such as to function as a support for a sheet of thermosetting polymer 16 fixed thereon by being baked at 600-650°C. On said polymer sheet 16 there is reproduced, via the technique of laser printing, the image that it is desired to illuminate using the system according to the invention.

Also connected to the output of the converter 4 is a control panel 18 for controlling the lamp 8. Said control panel may comprise, for example, an intensity regulator 22, a twilight switch or photodiode 20 for lighting at night, and a sliding switch 24 for switching the supply to the lamp on or off or for switching the supply onto the twilight switch.

Instead of the solar panel 1, the system may envisage a traditional mains supply through the socket 3 of a direct type or else through voltage reducers of a known type.

The system thus built enables the dimensions of the components to be reduced to the minimum, at the same time achieving acceptable levels of performance as regards the intensity of lighting and duration.

The second embodiment illustrated in Figure 2 regards the same system described with reference to Figure 1 but is designed so as to adapt to a picture frame made of a material that is more suitable for being used as knick-knack, as frame for a picture to be hung on a wall, or as a picture frame on a desk. The reference numbers of components that are the same are once again used here, whereas, of course, different reference numbers are used for components that differ as regards shapes and materials.

Consequently, the picture frame will assume the reference number 29, whereas the rear wall of the lamp 8, which is made of an aesthetically attractive material, for example wood or shiny metal, will be designated by the number 30. Designated by the number 32, instead, is the control panel, which comprises, as previously, a brightness regulator, a twilight switch or a photodiode 20, for night lighting, and a sliding switch 24 for turning on and turning off supply to the lamp, or switching it onto the twilight switch.

The panel 32 has a shape such as to form, when it is connected to the rear bottom part of the picture frame 10, a sort of pedestal or support, which is designed to support the frame itself in an almost vertical position, such as that for mounting portraits. The frame 10 is moreover provided with brackets 34 for fixing the rear wall on the lamp 8. The connection wire 6 will be connected to the converter 4 as for the system described previously, or else, more simply, will be connected to an a.c. socket designed to provide the lamp with the desired electrical supply.

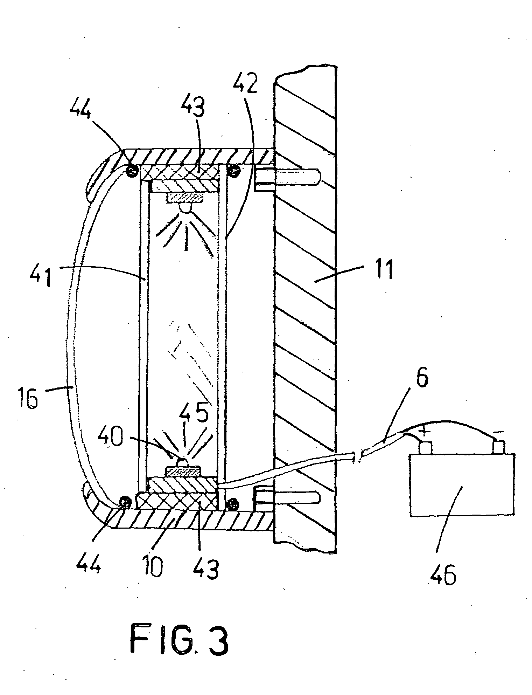

The third embodiment illustrated in Figure 3 is particularly suitable for tombstones in cemeteries.

In this latter solution, we find once again the tombstone 11, the picture frame 10, and the printed glass 14, which were already present in Figure 1.

The latter solution, however, uses LEDs 40 contained between a diffuser of light and a reflecting dish 42, which are designed to convey the light of the LEDs towards and onto the internal face of the printed glass on which the photograph is reproduced.

The assembly is completed with gaskets 43 set along the perimeter of the diffuser 41 and of the dish 42, beads of hermetic-seal glue 44, and a flexible printed circuit 45, which carries the LEDs 40.

If LEDs are used, a frequency converter is no longer necessary, but a resistor is sufficient, set in series to the LEDs as voltage regulator.

In Figure 3, the use of a rechargeable battery 46 of a commercially available type is hypothesized as means of supply, seeing that the lighting means are LEDs with a low level of current consumption. The use of the battery becomes indispensable in the points where the normal electric current is not available. However, it is conceivable also to use a supply system of a traditional type or solar panels of the type illustrated in Figure 1, without this in any way implying any change or loss to the inventive idea.

## Claims

1. A system for illuminating an image set inside a picture frame (10, 29) and a framework (11, 30), **characterized in that**:
- the image is reproduced on a body (14, 16) designed to be traversed by light coming from a light source (8, 40) set between the body (14, 16) and the framework (11, 30);
- means (1, 2, 3, 4, 46) are provided for electrical supply of said light source (8, 40); and
- means (6) are provided for electrical connection between the supply means (1, 2, 3, 4, 46) and the light source (8, 40).

2. The lighting system according to Claim 1, **characterized in that** the body (16) is a crystal glass (14) and **in that** the image is reproduced via laser printing on a sheet of thermosetting polymer (16) supported by said crystal glass.

3. The lighting system according to Claim 1, **characterized in that** the light source (8) is an electroluminescent lamp in the form of a plate.

4. The lighting system according to Claim 1, **characterized in that** the light source (8) is made up of LEDs (40).

5. The lighting system according to Claim 1, **characterized in that** the electrical-supply source is made up of:
- a solar-cell panel;
- a battery (2) of the d.c. rechargeable type;
- a converter (4) for converting d.c. into a.c.; and
- means for electrical connection between the panel (1), the battery (2), and the converter (4).

6. The lighting system according to Claim 5, **characterized in that** the converter has a 110-V 400-Hz output.

7. The lighting system according to Claim 1, **characterized in that** the electrical-supply source is the local electrical network.

8. The lighting system according to Claim 1, **characterized in that** inserted between the light source (8, 40) and the electrical-supply means (1, 2, 3, 4, 46) is a control panel (18).

9. The lighting system according to Claim 8, **characterized in that** the control panel (18) comprises:
- a brightness regulator (22);
- a twilight switch or photodiode (20); and
- a sliding switch (24).

10. The lighting system according to Claim 8, **characterized in that** the control panel has the shape of a pedestal designed to support the frame (10, 29).

11. The lighting system according to Claim 3, **characterized in that** set behind the plate-shaped lamp (8) is a filling wall (12), made of polystyrene foam.

12. The lighting system according to Claim 11, **characterized in that** the filling wall (12) is made of wood or else of metal.

13. The lighting system according to Claim 4, **characterized in that** the LEDs (40) are arranged along the internal periphery of the frame (10) and contained between a light diffuser (41), set between the LEDs (40) and the body (16), and a light-reflecting dish (42), set between the LEDs (40) and the frame (11).

14. The lighting system according to Claim 4, **characterized in that** the LEDs (40) are supplied by a battery of a rechargeable type.
